(19) Europäisches Patentamt
European Patent Office
Office européen des brevets

(11) Veröffentlichungsnummer : **0 083 313**
**B1**

(12) # EUROPÄISCHE PATENTSCHRIFT

(45) Veröffentlichungstag der Patentschrift : **18.09.85**

(51) Int. Cl.⁴ : **C 09 B 67/22**, C 09 B 29/36

(21) Anmeldenummer : **82810565.0**

(22) Anmeldetag : **24.12.82**

(54) **Farbstoffmischung, Verfahren zu ihrer Herstellung und Verwendung zum Färben und Bedrucken von hydrophobem Fasermaterial.**

(30) Priorität : **30.12.81 CH 8356/81**

(43) Veröffentlichungstag der Anmeldung : **06.07.83 Patentblatt 83/27**

(45) Bekanntmachung des Hinweises auf die Patenterteilung : **18.09.85 Patentblatt 85/38**

(84) Benannte Vertragsstaaten : **CH DE FR GB IT LI**

(56) Entgegenhaltungen :
**EP-A- 0 038 439**
**DE-A- 1 966 335**
**DE-A- 2 753 235**
**FR-A- 2 038 228**

(73) Patentinhaber : **CIBA-GEIGY AG**
**Postfach**
**CH-4002 Basel (CH)**

(72) Erfinder : **Lüthi, Christian, Dr.**
**Oberdorfstrasse 10**
**CH-4125 Riehen (CH)**
Erfinder : **Liechti, Hans-Wilhelm, Dr.**
**Brügglistrasse 7**
**CH-4104 Oberwil (CH)**

EP 0 083 313 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Anmelderin hat sich unter Bezugnahme auf die ältere Anmeldung Nr. 3 246 949 in Deutschland freiwillig eingeschränkt.

Aus der DE-OS 1 966 335 sind wasserunlösliche Monoazofarbstoffe bekannt, die z. T. der folgenden Formel I entsprechen und welche gelbe Ausfärbungen auf Polyestermaterialien ergeben. Diese Farbstoffe zeigen jedoch in wässriger Suspension bei erhöhter Temperatur eine starke Tendenz zur Teilchenvergrösserung, verursacht durch Rekristallisationsvorgänge, was beim Färben zu unerwünschten Farbstoffablagerungen auf dem zu färbenden Material und infolgedessen schlechter Reibechtheit führt.

Diese Rekristallisationstendenz zeigt sich schon bei Kochtemperatur und nimmt mit steigender Temperatur zu ; die Rekristallisation wird durch Carrierzusätze begünstigt.

Aufgabe der Erfindung war es daher, Farbstoffe zu entwickeln, die die aufgezeigten Nachteile nicht aufweisen.

Die Lösung bot sich in einer Farbstoffmischung an, die dadurch gekennzeichnet ist, dass sie einen Farbstoff der Formel I

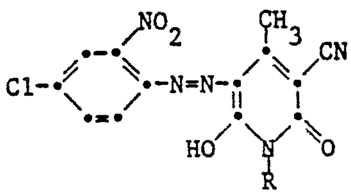

(I)

und einen Farbstoff der Formel Ia

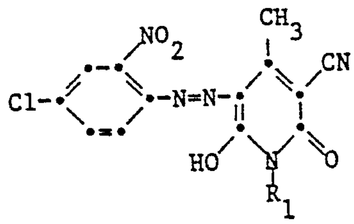

(Ia)

enthält, worin R einen unverzweigten oder verzweigten $C_1$-$C_{16}$-Alkylrest und $R_1$ einen von R verschiedenen unverzweigten oder verzweigten $C_1$-$C_{16}$-Alkylrest bedeuten, wobei Mischungen ausgenommen sind, in denen in den Einzelkomponenten sowohl R als auch $R_1$ für einen unverzweigten $C_3$-$C_7$-Alkylrest steht.

R und $R_1$ in der Bedeutung eines unverzweigten oder verzweigten $C_1$-$C_{16}$-Alkylrestes stellen z. B. den Methyl-, Aethyl-, n-Propyl-, n-Butyl-, iso-Butylrest, n-Hexylrest, n- und iso-Octyl-, n- und iso-Decyl-, n- und iso-Dodecyl- und n- und iso-Hexadecylrest dar.

Die erfindungsgemässen Farbstoffmischungen enthalten beispielsweise die folgenden Farbstoffe :

| | Farbstoff I<br>R = | Farbstoff Ia<br>$R_1$ = |
|---|---|---|
| a) | $CH_3$ | $C_2H_5$ |
| b) | $C_2H_5$ | $n$-$C_3H_7$ |
| c) | $CH_3$ | $n$-$C_3H_7$ |
| d) | $CH_3$ | sec-$C_4H_9$ |
| e) | $C_2H_5$ | $n$-$C_4H_9$ |
| f) | $n$-$C_4H_9$ | $n$-$C_8$-$H_{17}$ |
| g) | $n$-$C_4H_9$ | $n$-$C_{10}H_{21}$ |
| h) | $n$-$C_3H_7$ | 2-Aethyl-hexyl |

Bevorzugte Farbstoffmischungen enthalten 10 bis 50 Gew.-%, insbesondere 25 bis 35 Gew.-%, des Farbstoffes I und 90 bis 50 Gew.-%, insbesondere 75 bis 65 Gew.-%, des Farbstoffes Ia und insbesondere 30 Gew.-% des Farbstoffes I und 70 Gew.-% des Farbstoffes Ia.

Die Herstellung der Farbstoffmischung erfolgt nach bekannten Methoden, beispielsweise derart, dass man :

a) eine Diazokomponente der Formel II

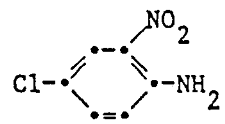

(II)

diazotiert und auf ein Gemisch der Kupplungskomponenten der Formel III und IIIa

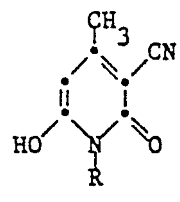

(III)

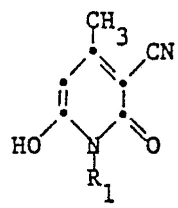

(IIIa)

kuppelt, worin R einen unverzweigten oder verzweigten $C_1$-$C_{16}$-Alkylrest und $R_1$ einen von R verschiedenen unverzweigten oder verzweigten $C_1$-$C_{16}$-Alkylrest bedeutet, wobei nicht beide Substituenten R und $R_1$ gleichzeitig für einen unverzweigten $C_3$-$C_7$-Alkylrest stehen, oder

b) dass man einen Farbstoff der Formel I mit einem Farbstoff der Formel Ia zu einer Farbstoffmischung mischt.

Was die bevorzugte Herstellungsvariante a) betrifft, so ist das Amin der Formel II und die Pyridone der Formel III bzw. IIIa bekannt und können nach bekannten Methoden hergestellt werden. Ebenso erfolgen die Diazotierungs- und Kupplungsreaktion nach bekannter Art und Weise, wie z. B. beschrieben in Ullmanns Encyklopädie der technischen Chemie, Bd. 5 (1954) Seite 783 ff.

Verwendung finden die erfindungsgemässen Farbstoffmischungen zum Färben und Bedrucken von halbsynthetischen und vor allem synthetischen hydrophoben Textilmaterialien oder von Gemischen von Textilmaterialien, die halbsynthetische bzw. synthetische hydrophobe Textilmaterialien enthalten. Die erfindungsgemässen Farbstoffmischungen gelangen besonders in solchen Färbeprozessen zur Anwendung, die zur Schonung des Materials bei Temperaturen zwischen 97 und 120 °C relativ langsam ablaufen, bzw. durch Carrierzugabe beschleunigt werden müssen, wie z. B. das Färben von Polyester/Wollmischungen.

Als halbsynthetische Textilmaterialien kommen vor allem Cellulose 2 1/2 Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Aethylenglykol oder Kondensationsprodukten aus Terephthalsäure und 1,4-Bis-(hydroxymethyl)-hexahydrobenzol ; Polycarbonate, z. B. solchen aus α,α-Dimethyl-4,4'-dihydroxy-diphenylmethan und Phosgen, Fasern auf Polyvinylchlorid-Basis sowie Polyamid-Basis.

Die Applikation der erfindungsgemässen Farbstoffmischungen auf den Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 125 °C. Cellulose-2 1/2-acetat färbt man vorzugsweise zwischen ungefähr 65 bis 85 °C und Cellulosetriacetat bei Temperaturen bis zu 115 °C.

Die neuen Farbstoffmischungen färben gleichzeitig im Färbebad anwesende Wolle und Baumwolle nicht oder nur wenig an, (sehr gute Reserve) so dass sie gut zum Färben von Polyester/Wolle- und Polyester/Cellulosefaser-Mischgeweben verwendet werden können.

Die erfindungsgemässen Farbstoffmischungen eignen sich ferner zum Färben nach dem Thermosol-Verfahren.

Das genannte Textilmaterial kann dabei in den verschiedensten Verarbeitungsformen vorliegen, z. B. als Faser, Faden oder Vlies, als Gewebe oder Gewirke.

Es ist vorteilhaft die erfindungsgemässe Farbstoffmischung vor ihrer Verwendung in ein Farbstoffpräparat überzuführen. Hierzu wird die Farbstoffmischung vermahlen, so dass ihre Teilchengrösse im Mittel zwischen 0,01 und 10 μm beträgt. Das Vermahlen kann in Gegenwart von Dispergiermitteln erfolgen. Beispielsweise wird die getrocknete Farbstoffmischung mit einem Dispergiermittel gemahlen oder in Pastenform mit einem Dispergiermittel geknetet und hierauf im Vakuum oder durch Zerstäuben

getrocknet. Mit den so erhaltenen Präparaten kann man, nach Zugabe von Wasser, färben und bedrucken.

Beim Bedrucken wird man die üblichen Verdickungsmittel verwenden, z. B. modifizierte oder nichtmodifizierte natürliche Produkte, beispielsweise Alginate, Britishgummi, Gummi arabicum, Kristallgummi, Johannisbrotkernmehl, Tragant, Carboxymethylcellulose, Hydroxyäthyl-cellulose, Stärke oder synthetische Produkte beispielsweise Polyacrylamide, Polyacrylsäure oder deren Copolymere oder Polyvinylalkohole.

Die erfindungsgemässen Farbstoffmischungen sind praktisch unempfindlich gegen Carrier und verleihen den genannten Materialien, vor allem dem Polyestermaterial, gelbe egale Farbtöne von sehr guten Echtheiten, wie vor allem guter Lichtechtheit, guter Sublimierechtheit, Thermofixier-, Plissier-, Chlor- und Nassechtheit, wie Wasser-, Schweiss- und Waschechtheit ; die Ausfärbungen sind ferner gekennzeichnet durch eine gute pH-Stabilität und sehr gute Reibechtheit.

Die erfindungsgemässen Farbstoffmischungen können auch gut verwendet werden zur Herstellung von Mischnuancen zusammen mit anderen Farbstoffen.

Die folgenden Beispiele veranschaulichen die Erfindung ohne sie darauf zu limitieren ; Temperaturen sind in Grad Celsius angegeben ; Teile (T) bedeuten, sofern nichts anderes angegeben ist, Gewichtsteile.

## Beispiel 1

114 g 75,9 %-iges 4-Chlor-2-nitroanilin, entsprechend (86,4 g 100 % oder 0,5 Mol) werden in 100 ml Wasser und 140 ml konzentrierter Salzsäure und 250 g Eis innerhalb von ca. 1 Stunde mit 130 ml 4-n Natiumnitrit diazotiert. Nach zweistündigem Nachrühren bei 4-5° wird die Diazolösung klärfiltriert und nach Zerstörung der überschüssigen salpetrigen Säure mit Sulfaminsäure innerhalb von 30 Minuten in eine 27° warme Lösung von 75,6 g N-Butyl-3-cyan-4-methyl-6-hydroxy-pyridon(2) (0,35 Mol + 5 %) und 28,0 g N-Aethyl-3-cyan-4-methyl-6-hydroxypyridon(2) (0,15 Mol + 5 %) in 700 ml Wasser und 55 ml 30-prozentiger Natronlauge laufen gelassen. Nach weiteren 45 Minuten Nachrühren bei Raumtemperatur ist die Kupplung beendet. Man stellt den pH-Wert auf 6 und rührt die gelbe Suspension während 2 Stunden bei 80 bis 85° ; dann wird heiss filtriert, gewaschen und getrocknet.

Man erhält folgende Farbstoffmischung :

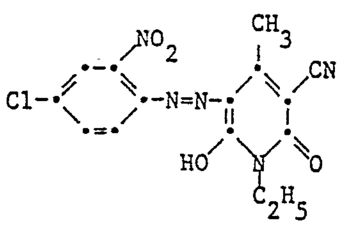

ca, 30 T

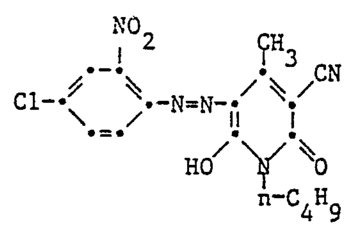

ca. 70 T

Diese Farbstoffmischung kann auch durch Mischen der separat hergestellten Einzelfarbstoffe erhalten werden.

Verfährt man gemäss den Angaben des Beispiels 1, verwendet aber als Kupplungskomponenten die in folgender Tabelle, Kol. II genannten Kupplungskomponenten in den in Kol. III angegebenen Teilen, so erhält man die in Kol IV angegebenen Farbstoffmischungen die auf Polyestermaterial ausgefärbt gelbe Färbungen mit guter Reibeechtheit ergeben.

Die in dieser Tabelle angegebenen Symbole A, B, C, D, E und F haben dabei folgende Bedeutung :

A = $-C_2H_5$
B = $-(CH_2)_3CH_3$
C = $-CH_2-\underset{\displaystyle C_2H_5}{\underset{|}{C}H}-(CH_2)_3CH_3$
D = $-(CH_2)_7CH_3$
E = $-(CH_2)_9CH_3$
F = $-(CH_2)_{11}-CH_3$

(Voir Tableau, page 5)

Tabelle

| I | II | III | IV |
|---|---|---|---|
| Bsp. | 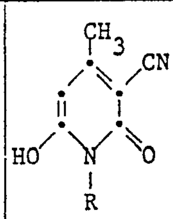 R = | Teile | Farbstoffmischungen 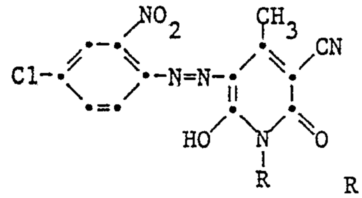 R = |
| 2 | B, C | 1:1 | B, C |
| 3 | B, D | 1:1 | B, D |
| 4 | B, F | 1:1 | B, F |
| 5 | C, D | 1:1 | C, D |
| 6 | C, E | 1:1 | C, E |
| 7 | C, F | 1:1 | C, F |
| 8 | D, E | 1:1 | D, E |
| 9 | D, F | 1:1 | D, F |
| 10 | A, C | 1:2 | A, C |
| 11 | B, C | 1:2 | B, C |
| 12 | C, B | 1:2 | C, B |

## Beispiel 13

In 360 ml eines auf 60° vorgeheizten wässrigen Färbebades enthaltend 0,1 g eines Farbstoffpräparates, welches 0,052 g reines Farbstoffgemisch gemäss Beispiel 1 enthält, 0,2 g eines Wollegalisiermittels, 0,72 g Ammonsulfat, 1,08 g eines Carriers (auf Basis Trichlorbenzol) und mit 85 %-iger wässriger Ameisensäure auf pH 5,5 gestellt, geht man mit 40 g eines Stoffwickels aus einem Polyester-Woll-Mischgewebe (55 % Polyesteranteil, 45 % Wollanteil, vorgewaschen, bei 140° getrocknet und 30 Sec. bei 180° thermofixiert) ein. (Pretema-Multicolor-Apparat) Man steigert die Temperatur dieses Färbebades während 30 Minuten auf 105° und färbt 45 Minuten bei dieser Temperatur. Anschliessend lässt man das Färbebad auf 80° abkühlen und spült das Färbegut 2 mal 5 Minuten bei 70° und 1 mal während 5 Minuten mit kaltem Wasser. Man erhält ein egal gelb gefärbtes Polyester-Woll-Mischgewebe, welches eine sehr gute Reibechtheit aufweist.

## Beispiel 14

0,1 g eines Farbstoffpräparates enthaltend 0,052 g des Farbstoffgemisches gemäss Beispiel 1 werden in 360 ml Wasser dispergiert. Zu dieser Dispersion gibt man 0,2 g eines Wollegalisiermittels, 1,6 g eines Wollschutzmittels, 0,72 g Natriumacetat, 0,36 g eines Carriers (auf Basis Trichlorbenzol) und stellt diese Dispersion mit wässeriger Essigsäure auf einen pH-Wert von ca. 5,5.

In dieses Färbebad geht man mit 40 g eines Polyester-Woll-Mischgewebes (gemäss Beispiel 13) ein, steigert die Temperatur innert 30 Minuten auf 120° und färbt 40 Minuten bei dieser Temperatur. Anschliessend lässt man auf 80° abkühlen und spült das Färbegut gemäss den Angaben im Beispiel 13. Man erhält ein egal gelb gefärbtes Polyester-Woll-Mischgewebe, welches eine sehr gute Reibechtheit aufweist.

Verwendet man anstelle der 0,1 g des obigen Farbstoffpräparates, welches 0,052 g der Farbstoffmischung gemäss Beispiel 1 enthält, 0,1 g eines Farbstoffpräparates, welches äquivalente Mengen des Einzelfarbstoffes der Formel

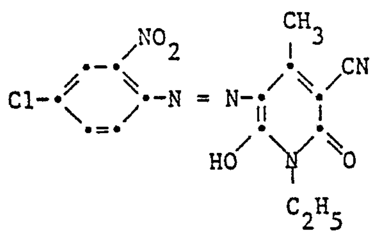

oder

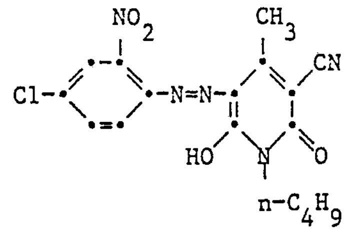

enthält und färbt im übrigen unter gleichen Bedingungen wie in diesem Beispiel angegeben so erhält man jeweils eine unegale, gelbe Ausfärbung die rote Abfiltrationen und eine schlechte Reibechtheit aufweist.

Beispiel 15

In 360 ml eines auf 60° vorgeheizten wässrigen Färbebades enthaltend 0,2 g eines Farbstoffpräparates, welches 0,1 g reines Farbstoffgemisch gemäss Beispiel 1 und 0,24 g eines sauren Wollfarbstoffes, erhalten durch Diazotieren des Amins der Formel

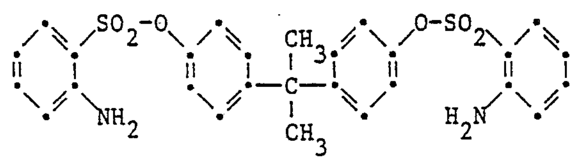

und Kuppeln auf das Pyrazolon der Formel

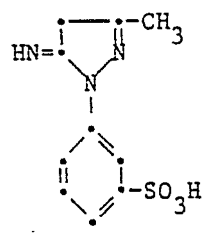

enthält, 0,2 g eines Wollegalisiermittels, 0,72 g Ammonsulfat, 1,08 g eines Carriers (auf Basis Trichlorbenzol) und mit 85-%iger wässriger Ameisensäure auf pH 5,5 gestellt, geht man mit 40 g eines Polyester-Woll-Mischgewebes (55 % Polyesteranteil, 45 % Wollanteil, vorgewaschen, bei 140° getrocknet und 30 Sec. bei 180° thermofixiert) ein. Man steigert die Temperatur dieses Färbebades während 30 Minuten auf 105° und färbt 45 Minuten bei dieser Temperatur. Anschliessend lässt man das Färbebad auf 80° abkühlen und spült das Färbegut 2 mal 5 Minuten bei 70° und 1 mal während 5 Minuten mit kaltem Wasser. Man erhält ein egal gelb gefärbtes Polyester-Woll-Mischgewebe, welches eine sehr gute Reibechtheit aufweist.

Verwendet man anstelle des obigen Farbstoffpräparates, welches 0,1 g der Farbstoffmischung gemäss Beispiel 1 enthält, 0,2 g eines Farbstoffpräparates, welches äquivalente Mengen des Einzelfarbstoffes der Formel

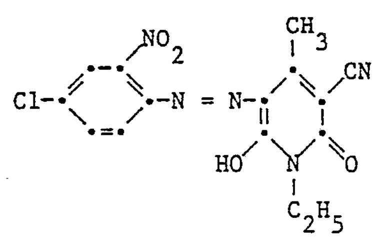

oder

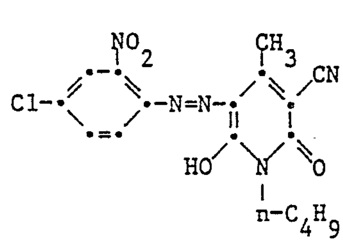

enthält und färbt im übrigen unter gleichen Bedingungen wie in diesem Beispiel angegeben so erhält man jeweils eine unegale, gelbe Ausfärbung die Abfiltrationen und eine schlechte Reibechtheit aufweist.

Beispiel 16

In 360 ml eines auf 60° vorgeheizten wässrigen Färbebades enthaltend 0,2 g eines Farbstoffpräparates, welches 0,1 g reines Farbstoffgemisch gemäss Beispiel 1 und 0,18 g eines reaktiven Wollfarbstoffes der Formel

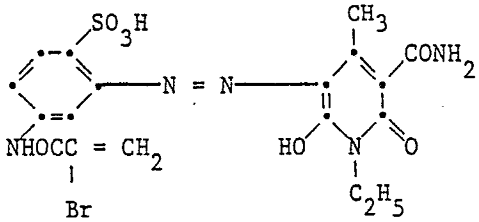

enthält, 0,4 g eines Wollegalisiermittels, 0,72 g Natriumacetat, 1,08 g eines Carriers (auf Basis Trichlorbenzol) und mit 80%iger wässriger Essigsäure auf pH 4,5 gestellt, geht man mit 40 g eines Polyester-Woll-Mischgewebes (55 % Polyesteranteil, 45 % Wollanteil, vorgewaschen, bei 140° getrocknet und 30 Sec. bei 180° thermofixiert) ein. Man steigert die Temperatur dieses Färbebades während 30 Minuten auf 105° und färbt 45 Minuten bei dieser Temperatur. Anschliessend lässt man das Färbebad auf 80° abkühlen und spült das Färbegut 1 mal 5 Minuten bei 80°, behandelt das Färbegut während 20 Minuten bei dieser Temperatur mit Ammoniak, lässt anschliessend das Bad ab und spült das Färbegut 1 mal 5 Minuten bei 70° ; sodann wird mit Essigsäure während 5 Minuten bei 70° neutralisiert und 1 mal 5 Minuten bei 70° und 1 mal während 5 Minuten mit kaltem Wasser gespült. Man erhält ein egal gelb gefärbtes Polyester-Woll-Mischgewebe, welches eine sehr gute Reibechtheit aufweist.

**Patentansprüche**

1. Farbstoffmischung, dadurch gekennzeichnet, dass sie einen Farbstoff der Formel I

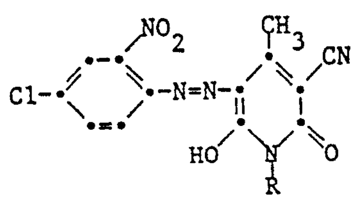

(I)

und einen Farbstoff der Formel Ia

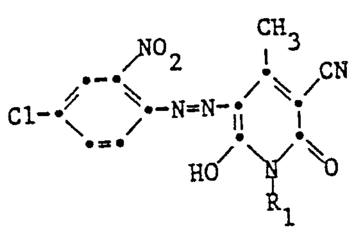

(Ia)

enthält, worin R einen unverzweigten oder verzweigten $C_1$-$C_{16}$-Alkylrest und $R_1$ einen von R verschiedenen unverzweigten oder verzweigen $C_1$-$C_{16}$-Alkylrest bedeutet, wobei Mischungen ausgenommen sind, in denen in den Einzelkomponenten sowohl R als auch $R_1$ für einen unverzweigten $C_3$-$C_7$-Alkylrest steht.

2. Farbstoffmischung nach Anspruch 1 dadurch gekennzeichnet, dass R und $R_1$ je einen an dem Stickstoffatom benachbarten Kohlenstoffatom unverzweigten $C_1$-$C_{16}$-Alkylrest bedeuten.

3. Farbstoffmischung nach den Ansprüchen 1 und 2 dadurch gekennzeichnet, dass R Aethyl und $R_1$ n-Butyl bedeutet.

4. Farbstoffmischung nach den Ansprüchen 1 bis 3, dadurch gekennzeichnet, dass sie 10 bis 50 Gew.-% des Farbstoffes I und 90 bis 50 Gew.-% des Farbstoffes Ia enthält.

5. Farbstoffmischung gemäss Anspruch 4, dadurch gekennzeichnet, dass sie 25 bis 35 Gew.-% des Farbstoffes I und 75 bis 65 Gew.-% des Farbstoffes Ia enthält.

6. Farbstoffmischung gemäss Anspruch 4, dadurch gekennzeichnet, dass sie 30 Gew.-% des Farbstoffes I und 70 Gew.-% des Farbstoffes Ia enthält.

7. Verfahren zur Herstellung von Farbstoffmischungen nach den Ansprüchen 1 bis 6, dadurch gekennzeichnet, dass man a) eine Diazokomponente der Formel II

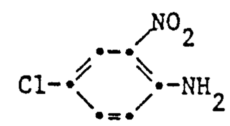 (II)

diazotiert und auf ein Gemisch der Kupplungskomponenten der Formel III und IIIa

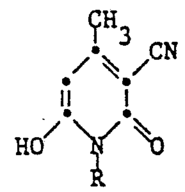

(III)

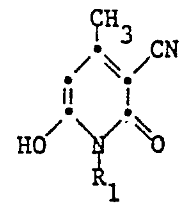

(IIIa)

kuppelt, worin R einen unverzweigten oder verzweigten $C_1$-$C_{16}$-Alkylrest und $R_1$ einen von R verschiedenen unverzweigten oder verzweigten $C_1$-$C_{16}$-Alkylrest bedeutet, wobei nicht beide Substituenten R und $R_1$ gleichzeitig für einen unverzweigten $C_3$-$C_7$-Alkylrest stehen, oder b) dass man einen Farbstoff der Formel I mit einem Farbstoff der Formel Ia zu einer Farbstoffmischung mischt.

8. Verwendung der Farbstoffmischung gemäss den Ansprüchen 1 bis 6 bzw. der nach dem Verfahren von Anspruch 7 erhaltenen Farbstoffmischungen zum Färben und Bedrucken von halbsynthetischem, synthetischem, hydrophobem Fasermaterial oder Gemischen von Fasermaterialien, die synthetisches hydrophobes Fasermaterial enthalten.

9. Verwendung der Farbstoffmischung gemäss Anspruch 8 zum Färben und Bedrucken nach dem Ausziehverfahren.

10. Verwendung der Farbstoffmischung gemäss Anspruch 8 und 9 zum Färben und Bedrucken von Fasergemischen aus Polyester und Baumwolle.

11. Verwendung der Farbstoffmischung gemäss Anspruch 8 und 9 zum Färben und Bedrucken von Fasergemischen aus Polyester und Wolle.

## Claims

1. A dye mixture which contains a dye of the formula I

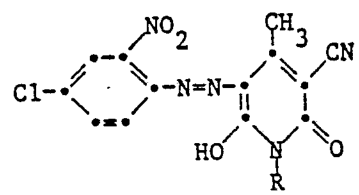 (I)

and a dye of the formula Ia

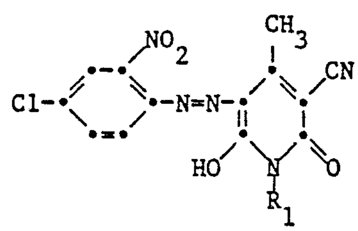 (Ia)

in which R is an unbranched or branched $C_1$-$C_{16}$ alkyl radical and $R_1$ is an unbranched or branched $C_1$-$C_{16}$ alkyl radical which differs from R, excepting a mixture in the individual components of which both R and $R_1$ are an unbranched $C_3$-$C_7$ alkyl radical.

2. A dye mixture according to claim 1, in which R and $R_1$ are each a $C_1$-$C_{16}$ alkyl radical which is unbranched at the carbon atom adjacent to the nitrogen atom.

3. A dye mixture according to either of claims 1 or 2, in which R is ethyl and $R_1$ is n-butyl.

4. A dye mixture according to any one of claims 1 to 3, which contains 10 to 50 % by weight of dye I and 90 to 50 % by weight of dye Ia.

5. A dye mixture according to claim 4, which contains 25 to 35 % by weight of dye I and 75 to 65 % by weight of dye Ia.

6. A dye mixture according to claim 4, which contains 30 % by weight of dye I and 70 % by weight of dye Ia.

7. A process for the preparation of a dye mixture according to any one of claims 1 to 6, which comprises a) diazotizing a diazo component of the formula II

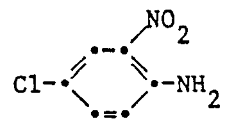

(II)

and coupling the diazotized product to a mixture of coupling components of the formulae III and IIIa

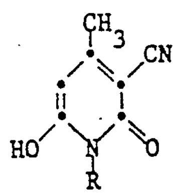

III

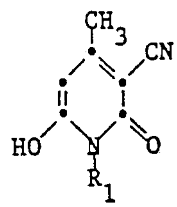

(III) (IIIa)

in which R is an unbranched or branched $C_1$-$C_{16}$ alkyl radical and $R_1$ is an unbranched or branched $C_1$-$C_{16}$ alkyl radical which differs from R, with the proviso that both substituents R and $R_1$ are not simultaneously an unbranched $C_3$-$C_7$ alkyl radical, or b) mixing a dye of the formula I with a dye of the formula Ia to give a dye mixture.

8. Use of a dye mixture according to any one of claims 1 to 6 or a dye mixture obtained according to the process of claim 7 for dyeing or printing regenerated or synthetic, hydrophobic fiber material or blends thereof which contain synthetic hydrophobic fiber material.

9. Use of a dye mixture according to claim 8 for dyeing or printing by the exhaust method.

10. Use of a dye mixture according to either of claims 8 or 9 for dyeing or printing fiber blends of polyester and cotton.

11. Use of a dye mixture according to either of claims 8 or 9 for dyeing or printing fiber blends of polyester and wool.

**Revendications**

1. Mélange colorant, caractérisé en ce qu'il contient un colorant de formule I

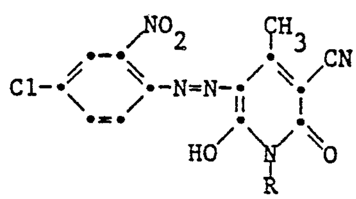

(I)

et un colorant de formule Ia

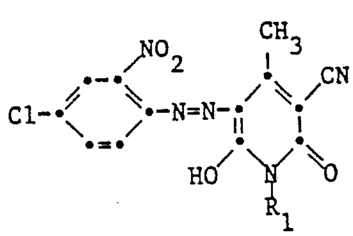

(Ia)

dans lesquelles R est un radical alkyle en $C_1$-$C_{16}$ à chaîne droite ou ramifiée, et $R_1$ est un radical alkyle en $C_1$-$C_{16}$, à chaîne droite ou ramifiée, différent de R, à l'exclusion des mélanges où, dans les constituants individuels R et $R_1$ sont chacun un radical alkyle en $C_3$-$C_7$ à chaîne non ramifiée.

2. Mélange colorant selon la revendication 1, caractérisé en ce que R et $R_1$ sont chacun un radical alkyle en $C_1$-$C_{16}$ à chaîne non ramifiée, sur l'atome de carbone voisin de l'atome d'azote.

3. Mélange colorant selon les revendications 1 et 2, caractérisé en ce que R est le radical éthyle et $R_1$ le radical n-butyle.

4. Mélange colorant selon les revendications 1 à 3, caractérisé en ce qu'il contient 10 à 50 % en poids du colorant I et 90 à 50 % en poids du colorant Ia.

5. Mélange colorant selon la revendication 4, caractérisé en ce qu'il contient 25 à 35 % en poids du colorant I et 75 à 65 % en poids du colorant Ia.

6. Mélange colorant selon la revendication 4, caractérisé en ce qu'il contient 30 % en poids du colorant I et 70 % en poids du colorant Ia.

7. Procédé pour la préparation de mélanges colorants selon les revendications 1 à 6, caractérisé en ce que a) on diazote un composant de diazotation de formule II

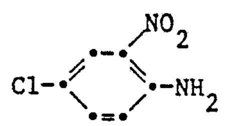

(II)

et qu'on le copule sur un mélange des composants de copulation de formules III et IIIa

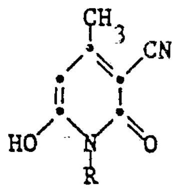

(III)

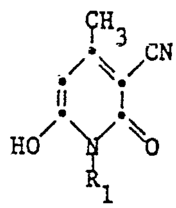

(IIIa)

dans lesquelles R est un radical alkyle en $C_1$-$C_{16}$ à chaîne droite ou ramifiée, et $R_1$ est un radical alkyle en $C_1$-$C_{16}$ à chaîne droite ou ramifiée, différent de R, les deux substituants R et $R_1$ n'étant pas simultanément un radical alkyle en $C_3$-$C_7$ à chaîne non ramifiée, ou b) qu'on mélange un colorant de formule I à un colorant de formule Ia pour obtenir un mélange colorant.

8. Utilisation du mélange colorant selon les revendications 1 à 6, ou des mélanges colorants obtenus selon le procédé de la revendication 7, pour la teinture et l'impression de matières fibreuses hydrophobes, synthétiques, semi-synthétiques, ou de mélanges de matières fibreuses, contenant une matière fibreuse hydrophobe synthétique.

9. Utilisation du mélange colorant selon la revendication 8, pour la teinture et l'impression par le procédé par épuisement.

10. Utilisation du mélange colorant selon les revendications 8 et 9 pour la teinture et l'impression de mélanges de fibres de polyester et de coton.

11. Utilisation du mélange colorant selon les revendications 8 et 9, pour la teinture et l'impression de mélanges de fibres de polyester et de laine.